# EUROPÄISCHE PATENTSCHRIFT

(11) **EP 3 310 593 B1**
(45) Veröffentlichungstag und Bekanntmachung des Hinweises auf die Patenterteilung: **28.12.2022**
(21) Anmeldenummer: 16729583.1
(22) Anmeldetag: 16.06.2016
(51) Int. Cl.: B60D 1/26, B60D 1/52, B60D 1/07

(54) **ANHÄNGEKUPPLUNG MIT EINER AUFNAHMEHÜLSE**
TRAILER COUPLING HAVING A RECEIVING SLEEVE
ATTELAGE COMPRENANT UN MANCHON DE RÉCEPTION

(30) Priorität: 17.06.2015 DE 202015103207 U
(43) Veröffentlichungstag der Anmeldung: 25.04.2018
(73) Patentinhaber: WESTFALIA - Automotive GmbH, 33378 Rheda-Wiedenbrück (DE)
(72) Erfinder: KROHN, Gerald, 33378 Rheda-Wiedenbrück (DE)
(74) Vertreter: Patentanwälte Bregenzer und Reule Partnerschaftsgesellschaft mbB
(86) Internationale Anmeldenummer: PCT/EP2016/063956
(87) Internationale Veröffentlichungsnummer: WO 2016/202956

(56) Entgegenhaltungen:
- WO-A1-2004/026598
- DE-U1-202013 009 204
- US-A1- 2009 189 368
- John Higham: "Class 1 hitch for the BMW i3", , 2 January 2015 (2015-01-02), XP055929992, Retrieved from the Internet: URL:https://www.youtube.com/watch?v=c1IJ4R bE7cc

## Beschreibung

Die Erfindung betrifft eine Anhängekupplung für ein Kraftfahrzeug, insbesondere einen Personenkraftwagen, gemäß dem Oberbegriff des Anspruchs 1.

Eine derartige Anhängekupplung ist beispielsweise in WO 2004/026598 A1 erläutert.

Eine aus DE 10 2011 009 306 A1 bekannte Anhängekupplung ist an verschiedene Anforderungen anpassbar, so dass zum Beispiel unterschiedliche Kupplungselemente montierbar sind. Allerdings ist die Flexibilität der bekannten Anhängekupplung noch nicht optimal.

Es ist daher die Aufgabe der vorliegenden Erfindung, eine verbesserte Anhängekupplung bereitzustellen.

Zur Lösung der Aufgabe ist eine Anhängekupplung gemäß der technischen Lehre des Anspruchs 1 vorgesehen.

Im Rahmen der Erfindung liegt auch folgendes: Anhängekupplung für ein Kraftfahrzeug, insbesondere einen Personenkraftwagen, mit einem an dem Kraftfahrzeug angeordneten oder befestigbaren Halter und einen an dem Halter lösbar befestigbaren Kupplungsarm, wobei der Kupplungsarm ein Halterteil mit einem Steckvorsprung zum Einstecken in eine Haltersteckaufnahme des Halters und ein Kupplungsteil mit einem Kuppelelement, insbesondere einer Kupplungskugel, zum Ankuppeln eines Lastenträgers oder eines Anhängers aufweist oder zum direkten Ankoppeln eines Lastenträgers vorgesehen ist, wobei das Halterteil eine integrierte Verriegelungseinrichtung mit mindestens einem Verriegelungskörper und einen in dem Halterteil zur Betätigung des mindestens einen Verriegelungskörpers in eine Verriegelungsstellung beweglich gelagerten Betätigungskörper, wobei der Verriegelungskörper in der Verriegelungsstellung in eine Verriegelungsaufnahme am Halter formschlüssig eingreift und in einer Lösestellung aus der Verriegelungsaufnahme herausbewegt ist, sodass der Steckvorsprung des Halterteils in der Haltersteckaufnahme des Halters in der Verriegelungsstellung des mindestens einen Verriegelungskörpers formschlüssig verriegelt ist und in der Lösestellung aus der Haltersteckaufnahme des Halters entfernbar ist. Bei der Anhängekupplung ist vorgesehen, dass das Halterteil eine Aufnahmehülse mit einer rohrförmigen Kupplungssteckaufnahme zum Einstecken eines Kupplungssteckvorsprungs des Kupplungsteils oder des Lastenträgers aufweist.

Der Kupplungsarm, d.h. das Halterteil und das Kupplungsteil, können Bestandteile der Anhängekupplung bilden.

Es ist ferner möglich, dass das Kupplungsteil und die oben erläuterte Anhängekupplung Systembestandteile eines Systems bilden. Weiterhin ist es möglich, dass dieses System oder ein anderes System einerseits die Anhängekupplung gemäß Anspruch 1 und andererseits einen Lastenträger und/oder ein Adapterelement des Lastenträgers, welches den Kupplungssteckvorsprung aufweist, umfasst.

Der Vorteil dieser Konstruktion ist es, dass das Halterteil bequem vom fahrzeugseitig fest angeordneten Halter entfernt werden kann, indem nämlich die Verriegelungseinrichtung gelöst wird. Die beweglichen Komponenten der Verriegelungseinrichtung sind am Halterteil angeordnet, sodass komplizierte und aufwändige Montagen am Kraftfahrzeug nicht notwendig sind. Beispielsweise müssen keine beweglichen Komponenten einer Verriegelungseinrichtung am Kraftfahrzeug montiert oder verlegt werden. So ist nämlich in der Regel der Halter hinter dem Stoßfänger des Kraftfahrzeugs verborgen, sodass er nicht unmittelbar zugänglich ist. Wenn dann in diesem Bereich direkt am Kraftfahrzeug eine Verriegelungseinrichtung angeordnet ist, müssen Bowdenzüge, elektrische Kabel und dergleichen mehr umständlich verlegt werden, beispielsweise in den Gepäckraum, wo dann entsprechende Handräder oder dergleichen zur Betätigung der Verriegelungseinrichtung angeordnet sein können. Das ist bei der Erfindung nicht der Fall.

Zweckmäßigerweise sind sämtliche bewegliche Komponenten der Verriegelungseinrichtung am Halterteil, d.h. also am vom Halter entfernbaren Bauteil des Kupplungsarms, angeordnet.

Zur Betätigung des mindestens einen Verriegelungskörpers dient zweckmäßigerweise eine Handbetätigungseinrichtung, insbesondere an Bord des Halterteils. Vorzugweise ist beispielsweise ein Drehknauf, ein Betätigungshebel oder dergleichen zur Betätigung des Betätigungskörpers vorgesehen. Jedenfalls ist eine manuelle Betätigungshandhabe zur Betätigung der Verriegelungseinrichtung insbesondere in Richtung der Lösestellung zweckmäßigerweise Bestandteil des Kupplungsarms, insbesondere des Halterteils.

Die Aufnahmehülse eignet sich zur Montage unterschiedlichster Kupplungsteile, aber auch eines Lastenträgers direkt. So kann in die Aufnahmehülse beispielsweise ein Kupplungsteil mit einem kugelförmigen Kuppelelement, nämlich einer Kupplungskugel, eingesteckt werden. An das Kuppelelement kann beispielsweise ein Lastenträger aufgesetzt werden, typischerweise jedoch ein Anhänger angehängt werden.

Es ist aber auch möglich, dass das Kupplungsteil selbst eine Aufnahmehülse aufweist, in die dann beispielsweise ein Lastenträger eingesteckt werden kann.

Weiterhin ist es möglich, dass an einem Lastenträger mindestens ein Kupplungssteckvorsprung vorgesehen ist, der in die Kupplungssteckaufnahme der Aufnahmehülse einsteckbar ist. Somit kann das erfindungsgemäße Halterteil sozusagen als Zwischenstück in den fahrzeugseitigen Halter eingesteckt werden, um dann die Montage eines Lastenträgers zu ermöglichen, dessen Kupplungssteckvorsprung in die Kupplungssteckaufnahme der Aufnahmehülse eingesteckt wird. Dabei ist es möglich, dass beispielsweise etwa quermittig am Fahrzeugheck eine erfindungsgemäße Anhängekupplung vorgesehen ist, in die dann sozusagen zentral der Lastenträger eingesteckt werden kann. Es ist aber auch möglich, dass am Heck des Kraftfahrzeugs zwei oder weitere erfindungsgemäße Anhängekupplungen vorgesehen sind, so das beispielsweise ein Lastenträger mit zwei Tragarmen, an denen jeweils ein Kupplungssteckvorsprung vorgesehen ist, in die jeweilige Aufnahmehülse des Halterteils eingesteckt werden kann. Die Halterteile sind beispielsweise mit gleichem Abstand zur Quermitte des Kraftfahrzeugs an einer Trägeranordnung angeordnet.

An dieser Stelle sei bemerkt, dass selbstverständlich auch eine Trägeranordnung, insbesondere ein Querträger, an welchem der fahrzeugseitige Halter befestigt ist, einen integralen Bestandteil der erfindungsgemäßen Anhängekupplung bilden kann.

Damit der Kupplungssteckvorsprung sozusagen nicht durch die Aufnahmehülse frei durchsteckbar ist, sondern dort in einer vorbestimmten Einstecktiefe anschlägt, ist erfindungsgemäß an einem Innenquerschnitt der Kupplungssteckaufnahme ein Endanschlag für eine freie Stirnseite des Kupplungssteckvorsprungs vorgesehen. Erfindungsgemäß hat die Kupplungssteckaufnahme einen Boden, an den die freie Stirnseite des Kupplungssteckvorsprungs anschlägt. Der Boden kann ein vollständiger die Bodenfläche der Kupplungssteckaufnahme bildender Boden sein, so dass die Kupplungssteckaufnahme bodenseitig sozusagen vollständig verschlossen ist. Es ist aber auch möglich, dass der Boden nur teilweise vorhanden ist, d.h. dass beispielsweise ein Stützelement in Richtung des Innenquerschnitts der Kupplungssteckaufnahme vorsteht und dort einen Teilbereich eines Bodens bildet. Dieses Stützelement dient dann als Endanschlag.

Eine andere Variante, auch in Kombination mit der vorgenannten Variante der Erfindung, sieht zweckmäßigerweise vor, dass am Außenumfang des Kupplungssteckvorsprungs ein Anschlag zum Anschlagen an einer freien Stirnseite der Aufnahmehülse vorgesehen ist. Der Anschlag am Außenumfang des Kupplungssteckvorsprungs kann beispielsweise flanschartig ausgestaltet sein. Es ist aber auch möglich, dass der Anschlag beispielsweise von einem vorstehenden Formschlusselement, insbesondere einem Bolzen oder dergleichen, gebildet ist. Die freie, als Anschlag dienende Stirnseite der Aufnahmehülse kann beispielsweise durch die Umfangswand der Aufnahmehülse gebildet sein. Mithin schlägt also der Anschlag des Kupplungssteckvorsprungs an der Stirnseite der Umfangswand der Aufnahmehülse an.

An der Stirnseite der Aufnahmehülse, insbesondere deren Umfangswand, ist aber auch eine Verstärkung oder ein dedizierter Anschlag zweckmäßig, nämlich beispielsweise wie folgt. Es ist nämlich möglich, dass an der freien Stirnseite der Aufnahmehülse ein Flanschvorsprung, insbesondere ein ringförmig die freie Stirnseite umgebender Flanschvorsprung, zum Anschlagen des Kupplungssteckvorsprungs angeordnet ist.

Die Aufnahmehülse kann durch ein Rohrelement gebildet sein. Dann reicht ein ausreichend starkes Rohr bzw. eine Rohrwandung mit ausreichender Dicke aus, um die notwendige Stabilität zu gewährleisten.

Eine zweckmäßige Ausführungsform der Erfindung sieht vor, dass die Aufnahmehülse durch mindestens ein Versteifungselement versteift ist. Beispielsweise sind an einem Rohrkörper der Aufnahmehülse Verstärkungsrippen oder Versteifungsrippen vorgesehen.

Eine bevorzugte Ausführungsform der Erfindung sieht vor, dass die Aufnahmehülse durch mindestens einen Verstärkungsring verstärkt ist. Der Verstärkungsring wirkt im Sinne einer Versteifung. Zweckmäßigerweise umgibt der Verstärkungsring den Außenumfang der Aufnahmehülse oder eines Rohrstücks oder Rohrkörpers der Aufnahmehülse vollständig. Denkbar wäre aber auch ein Verstärkungsring, der nur als Teilring ausgestaltet ist, d.h. nicht den gesamten Außenumfang des Rohrstücks oder Rohrkörpers der Aufnahmehülse umgibt.

Eine zweckmäßige Ausgestaltung sieht dabei vor, dass der mindestens eine Verstärkungsring an einer freien Stirnseite der Aufnahmehülse angeordnet ist. Somit ist also gerade dort, wo gegebenenfalls die stärkste Belastung durch das Kupplungsteil oder den Lastenträger auftritt, die Verstärkung vorgesehen. Der Verstärkungsring kann an dieser Stelle eine zusätzliche Funktion entfalten, nämlich als Längsanschlag für den Kupplungsvorsprung des Kupplungsteils oder des Lastenträgers.

Zur Verriegelung des Kupplungssteckvorsprungs an der Kupplungssteckaufnahme ist vorzugsweise eine Riegelanordnung vorgesehen.

Die Riegelanordnung umfasst zweckmäßigerweise ein Riegelelement, beispielsweise einen Steckriegel, Steckbolzen oder dergleichen, der in eine Verriegelungsaufnahme der Aufnahmehülse einsteckbar oder durch die Verriegelungsaufnahme durchsteckbar ist.

Möglich wäre beispielsweise, dass die Riegelanordnung ähnlich ausgestaltet ist wie diejenige, die an der Haltersteckaufnahme und dem Haltersteckvorsprung vorgesehen und wirksam ist. Bevorzugt ist jedoch die nachfolgend erläuterte Riegelanordnung.

Die Riegelanordnung umfasst beispielsweise ein Riegelelement, das in eine Verriegelungsaufnahme der Aufnahmehülse einsteckbar oder durch die Verriegelungsaufnahme durchsteckbar ist. Zweckmäßigerweise sind an der Aufnahmehülse mehrere Verriegelungsaufnahmen, insbesondere Durchstecköffnungen, vorgesehen. Bevorzugt sind Paarungen von Durchstecköffnungen, die einander gegenüberliegen bzw. miteinander fluchten, sodass das Riegelelement durch diese Verriegelungsaufnahmen durchsteckbar ist. Die jeweiligen Längsenden des Riegelelements sind abgewinkelt oder durch ein Sicherungselement sicherbar, beispielsweise einen Splintring oder dergleichen.

Eine bevorzugte Ausführungsform der Erfindung sieht vor, dass an dem Kupplungssteckvorsprung und der Kupplungssteckaufnahme Verriegelungsaufnahmen vorgesehen sind, die miteinander fluchten, wenn der Kupplungssteckvorsprung in die Kupplungssteckaufnahme eingesteckt ist. Das Riegelelement ist durch die Verriegelungsaufnahme durchsteckbar. Beispielsweise ist am Kupplungssteckvorsprung eine Durchtrittsöffnung für das Riegelelement vorgesehen, das diese Durchtrittsöffnung sowie weitere, als Verriegelungsaufnahmen an der Aufnahmehülse vorgesehene Durchstecköffnungen durchdringt. Somit kann der Kupplungssteckvorsprung nicht mehr aus der Kupplungssteckaufnahme herausgezogen werden.

Bevorzugt ist es, wenn die Kupplungssteckaufnahme und der Kupplungssteckvorsprung mindestens eine Verdrehsicherungskontur zur verdrehsicheren Aufnahme des Kupplungssteckvorsprung in der Kupplungssteckaufnahme aufweisen. Zum Beispiel kann ein zur Steckachse exzentrischer Verdrehsicherungsvorsprung vorgesehen sein. Bevorzugt ist es, wenn die Kupplungssteckaufnahme und der Kupplungssteckvorsprung einen polygonalen Querschnitt aufweisen, beispielsweise einen dreieckförmigen oder viereckförmigen Querschnitt, um auf diesem Wege die Verdrehsicherung zu gewährleisten. Bevorzugt ist ein etwa rechteckiger, insbesondere etwa quadratischer Querschnitt. Dies bedeutet, dass auch Ecken oder Eckbereiche ausgerundet sein können, sodass der Kupplungssteckvorsprung leicht in die Kupplungssteckaufnahme einsteckbar ist.

Eine Steckachse der Kupplungssteckaufnahme und eine Steckachse der Haltersteckaufnahme sind zweckmäßigerweise winkelig, etwa rechtwinkelig. Aber auch von einem rechten Winkel abweichende Winkel, beispielsweise Winkel von 80 oder 110°, sind zweckmäßig. Jedenfalls sind die Wirkungsachsen, mit denen die Kupplungssteckaufnahme und der Kupplungssteckvorsprung einerseits und andererseits die Haltersteckaufnahme und der Haltersteckvorsprung in Eingriff oder außer Eingriff gebracht werden können, vorzugsweise winkelig zueinander. Auch ein Winkel von zum Beispiel 50° sorgt dafür, dass eine Kraftwirkung beispielsweise in Fahrzeuglängsrichtung, die zwischen der Kupplungssteckaufnahme und dem Kupplungssteckvorsprung wirkt, nicht zugleich als eine Kraft wirkt, um den Haltersteckvorsprung aus der Haltersteckaufnahme herauszuziehen.

Eine bevorzugte Ausführungsform der Erfindung, die in der Zeichnung auch näher dargestellt ist, sieht vor, dass eine Steckachse der Kupplungssteckaufnahme im Wesentlichen horizontal verläuft. Bei der Haltersteckaufnahme und dem Haltersteckvorsprung ist es vorteilhaft, wenn die Steckachse im Wesentlichen vertikal verläuft. Somit kann der fahrzeugseitige Halter bequem beispielsweise hinter einem Stoßfänger des Kraftfahrzeugs untergebracht werden und das Kupplungsteil von unten her in den fahrzeugseitigen Halter eingesteckt werden. Die Handhabung ist bequem, die Anordnung optisch ansprechend.

Erfindungsgemäß ist vorgesehen, dass die Aufnahmehülse einen integralen Bestandteil des Halterteils bildet. Die Aufnahmehülse ist von einem Haltekörper des Halterteils integral gebildet. Der Haltekörper ist ein Gussteil oder Schmiedeteil, an dem die Aufnahmehülse als ein Hülsenabschnitt ausgestaltet ist.

Eine vorteilhafte Ausführungsform der Erfindung sieht vor, dass die Aufnahmehülse lösbar mit dem Halterteil verbunden ist, beispielsweise mit dem Halterteil verschraubt, vernietet oder dergleichen. Somit kann das Halterteil wahlweise mit unterschiedlichen Aufnahmehülsen, beispielsweise Aufnahmehülsen unterschiedlicher Querschnitte, versehen werden. Die Montage ist einfach, eine Umrüstung kann leicht vonstattengehen.

Eine bevorzugte Variante der Erfindung sieht vor, dass das Halterteil eine gabelförmige Halterung aufweist, in welcher die Aufnahmehülse gehalten ist. Beispielsweise ist die Aufnahmehülse von unten her oder von vorn her (bezogen auf die am Kraftfahrzeug montierte Stellung) in die gabelförmige Halterung eingesetzt. Dort kann sie dann mit einer Schraube und/oder durch Verkleben und oder durch Verschweißen oder dergleichen gesichert bzw. dauerhaft befestigt werden.

Die gabelförmige Halterung kann beispielsweise Gabelschenkel oder Seitenschenkel haben, die vom Haltersteckvorsprung nach unten, d.h. zur Fahrbahn hin (bezogen auf die am Kraftfahrzeug montierte Stellung) abstehen.

Im anderen der oben genannten Fälle, wenn nämlich die Aufnahmehülse von vorn her in die gabelförmige Halterung eingesetzt ist, weist die gabelförmige Halterung beispielsweise vom Haltersteckvorsprung horizontal abstehende Gabelarme oder Gabelschenkel auf, zwischen denen die Aufnahmehülse aufgenommen ist.

Vorteilhaft ist es, wenn die Halterung seitliche Arme oder Schenkel aufweist, an denen Wände, beispielsweise Seitenwände, der Aufnahmehülse anliegen.

Weiterhin ist es vorteilhaft, wenn die Halterung einen Boden aufweist, an dem die Aufnahmehülse anliegt.

Eine Halterung für die Aufnahmehülse kann auch ringförmig sein, sodass die Aufnahmehülse in die Halterung einsteckbar ist.

Vorteilhaft ist es jedenfalls, wenn ein Aufnahmeraum, der von der Halterung begrenzt ist, einen größten Teil des Querschnitts der Aufnahmehülse aufnimmt, während ein kleinerer Teil des Querschnitts der Aufnahmehülse vor die Halterung vorsteht oder nicht in dem Aufnahmeraum aufgenommen ist.

Die Arme der gabelförmigen Halterung haben beispielsweise eine Längserstreckung von einem Boden der Halterung weg. Ein vor die Arme vorstehender Abschnitt der Aufnahmehülse ist in Bezug auf diese Längserstreckung vorzugsweise kürzer als zwischen den Armen aufgenommener Abschnitt der Aufnahmehülse. In anderer Formulierung kann man also sagen, dass vorteilhaft in Bezug auf eine Längserstreckung der Arme der Halterung ein größerer Teil der Aufnahmehülse zwischen den Armen angeordnet ist und ein kleinerer Teil der Aufnahmehülse vor die Arme vorsteht.

Vorteilhaft ist beispielsweise bei einer ringförmigen oder gabelförmigen Halterung vorgesehen, dass die Aufnahmehülse an mindestens drei zueinander winkeligen Seiten an der Halterung abgestützt ist.

Die gabelförmige Halterung oder auch eine ringförmige Halterung weist beispielsweise vom Haltersteckvorsprung des Halterteils vorstehende Gabelarme oder Gabelschenkel auf.

Die Halterung, also beispielsweise Gabelarme oder Gabelschenkel, ist mit dem Haltersteckvorsprung vorzugsweise einstückig.

Ein bevorzugtes Konzept sieht weiterhin vor, dass die Aufnahmehülse wie nachfolgend an dem Haltersteckvorsprung angeordnet ist oder ein Körper des Halterteils, zum Beispiel ein Armkörper des Halterteils, welcher den Haltersteckvorsprung aufweist, die nachfolgende Konfiguration aufweist:
Bevorzugt ist vorgesehen, dass die Aufnahmehülse so an dem Haltersteckvorsprung angeordnet ist, dass sie im am Kraftfahrzeug montierten Zustand zu einem Stoßfänger des Kraftfahrzeugs hin vor den Haltersteckvorsprung vorsteht und/oder entgegen einer Vorwärts-Fahrtrichtung des Kraftfahrzeugs nach hinten vor den Haltersteckvorsprung vorsteht.

Die Aufnahmehülse steht also in Fahrtrichtung des Kraftfahrzeugs vorteilhaft nach hinten vor den Haltersteckvorsprung vor. Beispielsweise ist eine im Wesentlichen rechtwinkelige oder L-förmige Anordnung von Haltersteckvorsprung und Aufnahmehülse realisiert. Beispielsweise kann ein den Kupplungssteckvorsprung aufweisender Steckabschnitt oder Steckarm des Lastenträgers oder des Kupplungsteils kurz sein.

Die Aufnahmehülse steht vorteilhaft im am Kraftfahrzeug montierten Zustand vor einen Stoßfänger oder ein Heck des Kraftfahrzeugs vor.

Weiterhin zweckmäßig ist es, wenn eine Einstecköffnung der Aufnahmehülse im am Kraftfahrzeug montierten Zustand des Halterteils nach hinten und/oder frei vor einen Stoßfänger des Kraftfahrzeugs vorsteht. Durch diese Maßnahme kann das Kupplungsteil oder der Lastenträger leicht in die Aufnahmehülse eingesteckt werden.

Zweckmäßigerweise kann auch das Halterteil mehrteilig sein und ein Basisteil sowie ein Aufnahmeteil aufweisen, die mit Flanschteilen miteinander verbindbar sind. Die Flanschteile stützen sich mit Stützflächen aneinander ab und sind anhand einer Schraubanordnung miteinander verschraubbar.

Das Aufnahmeteil kann an dem Basisteil vorzugsweise in mindestens zwei verschiedenen Abständen bezüglich einer Fahrbahnoberfläche montierbar sein. Die Stützflächen oder mindestens eine Stützfläche, zweckmäßigerweise die Stützfläche des Flanschteils des Basisteils, haben bezüglich ihrer Längserstreckung eine solche Länge, dass das jeweils andere Flanschteil in zwei Montagelängspositionen an diesem Flanschteil montierbar ist, und die Aufnahmehülse oder dass die Aufnahmehülse tragende Aufnahmeteil in mindestens zwei voneinander verschiedenen Abständen zu einer Fahrbahnoberfläche an dem Basisteil montierbar ist.

Vorteilhaft ist vorgesehen, dass die Aufnahmehülse an ihrer Rückseite, entgegengesetzt zu einer Einstecköffnung für den Kupplungssteckvorsprung, durch ein Flanschteil abgestützt ist.

Nachfolgend werden Ausführungsbeispiele der Erfindung anhand der Zeichnung erläutert. Es zeigen:
- Figur 1: eine perspektivische Schrägansicht einer erfindungsgemäßen Anhängekupplung, mit einem angedeuteten Kupplungsteil,

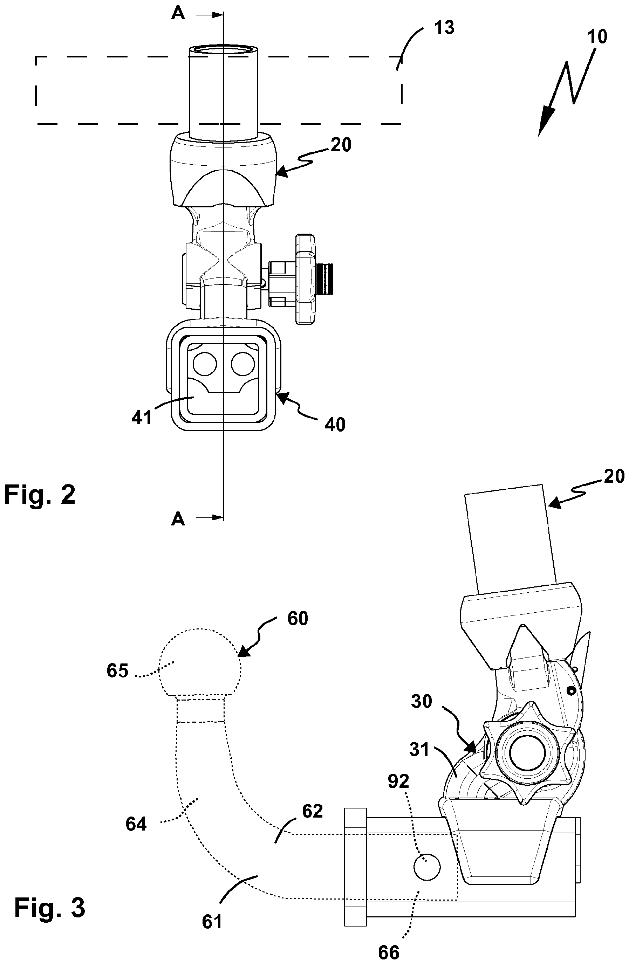

- Figur 2: eine Frontalansicht der Anhängekupplung (Blickrichtung von hinten auf ein Kraftfahrzeug) gemäß Figur 1, ohne Kupplungsteil,
- Figur 3: eine Seitenansicht der Anhängekupplung

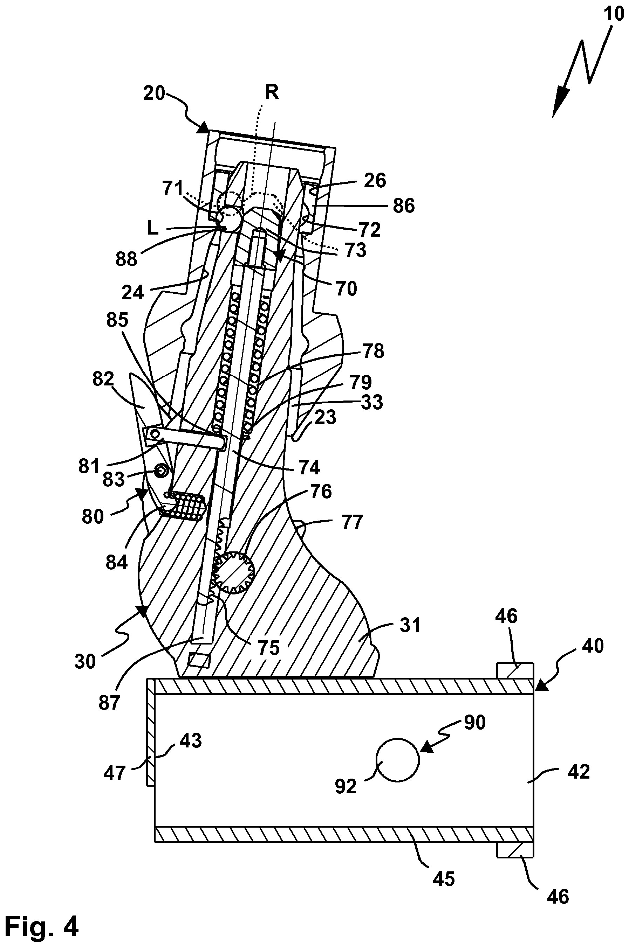

- Figur 4: einen Querschnitt durch die Anhängekupplung gemäß Figur 2 entlang einer Schnittlinie A-A in Figur 2,
- Figur 5: eine perspektivische Schrägansicht der Anhängekupplung etwa entsprechend Figur 1, jedoch mit einem alternativen Kupplungsteil,
- Figur 6: eine schematische Draufsicht auf ein Heck eines Kraftfahrzeugs mit einer Trägeranordnung, die zwei erfindungsgemäße Anhängekupplungen aufweist, an denen ein Lastenträger montiert ist, und
- Figur 7: eine Variante der erfindungsgemäßen Anhängekupplung, wobei die Aufnahmehülse anhand einer Flanschanordnung am Halterteil befestigt ist.

An einem Kraftfahrzeug 11 ist eine Anhängekupplung 10 beispielsweise anhand einer Trägeranordnung 12 befestigt. Die Trägeranordnung 12 umfasst beispielsweise einen Querträger 13, der sich quer zur Fahrzeuglängsrichtung des Kraftfahrzeugs 11 am Heck oder hinter dem Heck 14 des Kraftfahrzeugs 11 erstreckt. An dem Querträger 13 ist ein Halter 10 angeordnet, der mit dem Querträger 12 beispielsweise verschraubt, verschweißt oder in sonstiger Weise fest verbunden ist. Der Querträger 13 ist beispielsweise mittels nicht dargestellter Seitenträger oder Befestigungskonsolen am Kraftfahrzeug 11, insbesondere dessen Karosserie, befestigt, beispielweise mit diesem verschraubt.

Der Querträger 13, insbesondere in Kombination mit den Seitenträgern und/oder Befestigungskonsolen, und die Trägeranordnung 12 können Bestandteile der erfindungsgemäßen Anhängekupplung 10 bilden.

Der Halter 20 dient zum Halten eines Kupplungsarms 15, der lösbar am Halter 20 befestigbar ist. Beispielsweise hat der Halter 20 einen Rohrkörper 12, an dessen Aufnahmeende 22 eine Einführöffnung 23 einer Haltersteckaufnahme 24 vorgesehen ist. In die Haltersteckaufnahme 24 kann der Kupplungsarm 15 mit einem Steckvorsprung 33 eingesteckt werden.

Der fahrzeugseitige Halter 20 ist vorteilhaft hinter einem Stoßfänger 16 des Kraftfahrzeugs 11 verborgen. Der Kupplungsarm 15 steht in den freien Bereich hinter das Heck 14 bzw. den Stoßfänger 16 vor, sodass ein Anhänger angekuppelt oder ein Lastenträger auf dem Kupplungsarm 15 montiert werden kann.

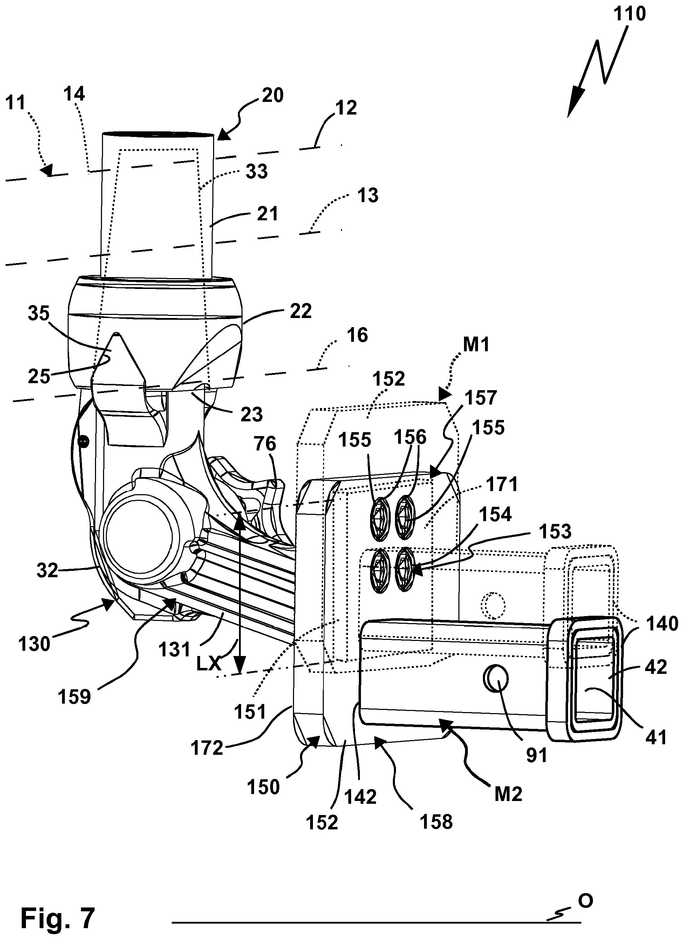

Der Kupplungsarm 15 ist zweiteilig, wobei er ein Halterteil 30 zur Befestigung am fahrzeugseitigen Halter 20 sowie ein Kupplungsteil 60 mit einem Kuppelelement 65, zum Beispiel einer Kupplungskugel, zum Ankuppeln eines Anhängers oder Lastenträgers aufweist. Als Kuppelelement 65 könnte aber in einer anderen Ausgestaltung auch eine Steckaufnahme oder ein Steckvorsprung zum Anstecken eines Lastenträgers vorgesehen sein, beispielsweise entsprechend Figur 7.

Das Halterteil 30 hat neben seinem Steckvorsprung 33 jeweils seitlich Formschlusskonturen 35, beispielsweise keilförmige Formschlussvorsprünge, zum Eingriff in korrespondierende Formschlusskonturen 25 des Halters 20, z.B. Formschlussaufnahmen. Die Formschlusskonturen 25 sind zu den Formschlusskonturen 35 passend, also hier auch keilförmig ausgestaltet. Beispielsweise befinden sich die Formschlusskonturen 25 direkt neben der Einführöffnung 23. Somit wird das Halterteil 30 verdrehsicher am Halter 20 gehalten.

Zur Verriegelung des Halterteils 30 am Halter 20 dient eine Verriegelungseinrichtung 70. Die Verriegelungseinrichtung 70 umfasst mindestens einen, vorzugsweise zwei oder drei Verriegelungskörper 71, beispielsweise Kugeln oder sonstige Formschlusselemente. Die Verriegelungskörper 71 greifen in eine Verriegelungsaufnahme oder mehrere Verriegelungsaufnahmen 72 am Halter 20 ein. Die Verriegelungsaufnahme oder Verriegelungsaufnahmen 72 sind an einem Haltekörper 86 vorgesehen, der in einer Aufnahme 26 des Halters 20 aufgenommen ist. Selbstverständlich können die Verriegelungsaufnahmen 72 und die Verriegelungsaufnahme 72 auch unmittelbar am Halter 20 vorgesehen sein.

Die Verriegelungskörper 71 sind beweglich an dem Halterteil 30 gelagert, beispielsweise in Führungen 88 aufgenommen. Die Verriegelungskörper 71 können in den Führungen 88, die sich radial von einem Kanal 87 weg erstrecken, durch einen Betätigungskörper 73 nach radial außen in Richtung der Verriegelungsaufnahme 72, beispielsweise einer Rinne, verdrängt werden, um das Halterteil 30 am Halter 20 zu verriegeln.

Der Betätigungskörper 73 ist beispielsweise an einem Längsende eines Bolzenelements 74 angebracht, das am anderen Längsendbereich einen Zahnstangenabschnitt 75 aufweist. Das Bolzenelement 74 ist in dem Kanal 87 längsverschieblich aufgenommen. Beispielsweise ist der Zahnstangenabschnitt 75 durch ein Ritzel 76 betätigbar. Das Ritzel 76 kann anhand eines Handgriffelements 77, z.B. eines Handrads, verdreht werden, um somit den Betätigungskörper 73 in Richtung einer Lösestellung L, in welcher die Verriegelungskörper 71 nicht in die Verriegelungsaufnahme 72 eingreifen, oder der Verriegelungsstellung R, in welcher die Verriegelungskörper 71 in die Verriegelungsaufnahme 72 eingreifen, verstellt werden. Die Verriegelungsstellung R ist nur in Bezug auf den Betätigungskörper 73, der in diesem Fall weiter vom Ritzel 76 weg verstellt ist, in der Zeichnung dargestellt.

Allerdings ist die Verriegelungseinrichtung 70 nur in Richtung der Lösestellung L aktiv zu betätigen, während in Richtung der Verriegelungsstellung R eine Federanordnung mit einer Feder 78 wirkt. Diese stützt sich einerseits an einer Stufe 79 im Kanal 87 ab, andererseits am Betätigungskörper 73, sodass dieser in Richtung der Verriegelungsstellung R federbelastet ist.

In der Lösestellung L kann die Verriegelungseinrichtung 70 anhand einer Sicherungseinrichtung 80 gehalten werden, die beispielsweise einen Betätigungshebel 82 aufweist. Der Betätigungshebel 82 betätigt einen Sicherungsstift 81, der in eine Sicherungsaufnahme 85 am Bolzenelement 74 eingreift, wenn dieses in Richtung der Lösestellung L verstellt ist. Der Betätigungshebel 82 ist durch eine Feder 84, die auf einen Hebelarm des Betätigungshebels 82 wirkt, in Richtung der Sicherungsstellung bzw. der Eingriffstellung des Sicherungsstifts 81 in die Sicherungsaufnahme 85 federbelastet. Wenn das Halterteil 30 in den Halter 20 eingesteckt wird, löst der Betätigungshebel 82 aus, indem er nämlich an den Halter 20 anschlägt. Dabei verlagert er den Sicherungsstift 81 aus der Sicherungsaufnahme 85 heraus, sodass die Feder 78 den Betätigungskörper 70 in Richtung der Verriegelungsstellung R betätigen kann und dieser somit die Verriegelungskörper 71 in die Verriegelungsaufnahme (en) 72 hinein verstellt.

Das Halterteil 30 weist einen Armabschnitt 31 auf, der über einen Krümmungsabschnitt 32 mit dem Haltersteckvorsprung 33 verbunden ist. Im Bereich des Krümmungsabschnitts 32 ist beispielsweise das Handrad oder das Handgriffelement 77 angeordnet.

Das Kupplungsteil 60 ist an das Halterteil 30 ansteckbar. Das Kupplungsteil 60 weist beispielweise einen Armkörper 61 auf, an dessen freiem Endbereich 63 ein Kuppelelement 65, beispielsweise eine Kupplungskugel angeordnet ist. Entgegengesetzt zu dem freien Endbereich 63 ist ein Kupplungssteckvorsprung 66. Zwischen dem Kupplungssteckvorsprung 66 und dem freien Endbereich 63 erstreckt sich ein Krümmungsabschnitt 64 eines Armkörpers 61 des Kupplungsteils 60.

An dem Halterteil 30 ist eine Aufnahmehülse 40 vorgesehen, die eine Kupplungssteckaufnahme 41 bereitstellt. In eine freie Einstecköffnung 42 der Kupplungssteckaufnahme 41 ist der Kupplungssteckvorsprung 66 einsteckbar.

Die Kupplungssteckaufnahme 41 weist einen Anschlag 43 auf, an dem das freie Ende des Kupplungssteckvorsprungs 66 beim Einstecken in die Kupplungssteckaufnahme 41 anschlägt. Der Anschlag 43 wird beispielsweise von einem Anschlagelement 47 bereitgestellt, das vor eine Umfangswand 46 der Aufnahmehülse 40 zu deren Innenquerschnitt 44 vorsteht.

Der Innenquerschnitt 44 der Einstecköffnung 42 sowie der Kupplungssteckaufnahme 41 ist passend zu einem Querschnitt des Kupplungssteckvorsprungs 66, beispielsweise vorliegend rechteckig, insbesondere etwa quadratisch. Dabei sind Eckbereiche, nämlich Außenecken des Kupplungssteckvorsprungs 66 sowie Innenecken der Kupplungssteckaufnahme 41 gerundet, so dass das Kupplungsteil 60 bequem in die Aufnahmehülse 40 einsteckbar ist. Der polygonale Innenquerschnitt 44 und der dazu formschlüssig passende Außenquerschnitt des Kupplungssteckvorsprungs 66 bilden eine Verdrehsicherung, so dass der Kupplungssteckvorsprung 66 in der Kupplungssteckaufnahme 41 nicht verdrehbar ist.

An einer freien Stirnseite 48 der Aufnahmehülse 40 ist ein Verstärkungsring 46 angeordnet. Dieser ist beispielsweise als separates Bauteil auf die Aufnahmehülse 40 aufgesteckt und dort festgelegt, beispielsweise verschweißt oder verklebt. Es ist aber auch möglich, dass ein Rohrelement, aus welchem die Aufnahmehülse 40 geformt ist, an seiner Frontseite oder der Stirnseite 48 umgebördelt oder umgefalzt wird, sodass jedenfalls im Bereich der Stirnseite 48 eine Verstärkung vorhanden ist.

Die Aufnahmehülse 40 ist in einer Halterung 27 des Halters 20 aufgenommen. Die Halterung 27 ist gabelförmig und weist seitliche Arme 28 auf. Eine obere Wand 49 der Aufnahmehülse 40 liegt am Boden der Halterung 27 an. Die Arme 28 erstrecken sich an Seitenwänden 50 der Aufnahmehülse 40, etwa bis zu einer Wand 51, die der Wand 49 gegenüberliegt, jedoch nicht ganz.

Somit ist ein größerer Teil eines Querschnitts der Aufnahmehülse 40 zwischen den Armen 28 oder in der Halterung 27 aufgenommen als die Aufnahmehülse 40 vor die Arme 28 vorsteht.

Der größte Teil der Aufnahmehülse 40 oder der größte Querschnitt der Aufnahmehülse 40 ist in einem Aufnahmeraum 29 der Halterung 27 aufgenommen.

In Bezug auf eine Längserstreckung LE der Arme 28 steht also die Aufnahmehülse 40 nur wenig vor die Arme 28 vor und ist größtenteils zwischen den Armen 28 aufgenommen.

Die Arme 28 sind im Bereich des Bodens der Halterung 27 breiter, an ihren freien Endbereichen jedoch schmaler. Die Arme 28 verjüngen sich also vom Boden der Halterung 27 weg.

Die Halterung 27 und der Haltersteckvorsprung 33 sind vorteilhaft einstückig. Beispielsweise ist die Halterung 27 einstückig mit dem Armabschnitt 31, welcher seinerseits wiederum mit dem Krümmungsabschnitt 32 und dem Haltersteckvorsprung 33 einstückig ist. Die Halterung 27 und der Haltersteckvorsprung 33 sind beispielsweise an einem Körper 36, z.B. einem Armkörper, des Halterteils 30 vorgesehen. Der Körper 36 ist vorzugsweise ein Gussteil oder Schmiedeteil.

Die Aufnahmehülse 40 umfasst zweckmäßigerweise einen Rohrkörper oder ist durch einen Rohrkörper gebildet.

Die Aufnahmehülse 40 ist in der Halterung 27 beispielsweise verklebt, verschweißt oder anhand einer Schraubenanordnung gesichert. Exemplarisch ist eine Schweißnaht 27a eingezeichnet.

Selbstverständlich wäre es möglich, anstelle der Halterung 27 auch eine ringförmige Aufnahme 127 für die Aufnahmehülse 40 vorzusehen, die in der Zeichnung schematisch angedeutet ist.

Das Kupplungsteil 60 ist am Halterteil 30 anhand einer Riegelanordnung 90 verriegelbar. An der Aufnahmehülse 40 befinden sich einander gegenüberliegende und miteinander fluchtende Verriegelungsaufnahmen 91, die mit einer Verriegelungsaufnahme 92 des Kupplungsteils 60 fluchten, wenn dessen Kupplungssteckvorsprung 66 in die Kupplungssteckaufnahme 41 eingesteckt ist. Dann kann ein Riegelelement 93, beispielsweise ein Bolzen oder dergleichen, durch die Verriegelungsaufnahmen 91, 92 durchgesteckt werden, sodass der Kupplungssteckvorsprung 66 nicht mehr entlang seiner Steckachse S2, entlang derer er in die Kupplungssteckaufnahme 41 eingesteckt ist, herausgezogen werden kann.

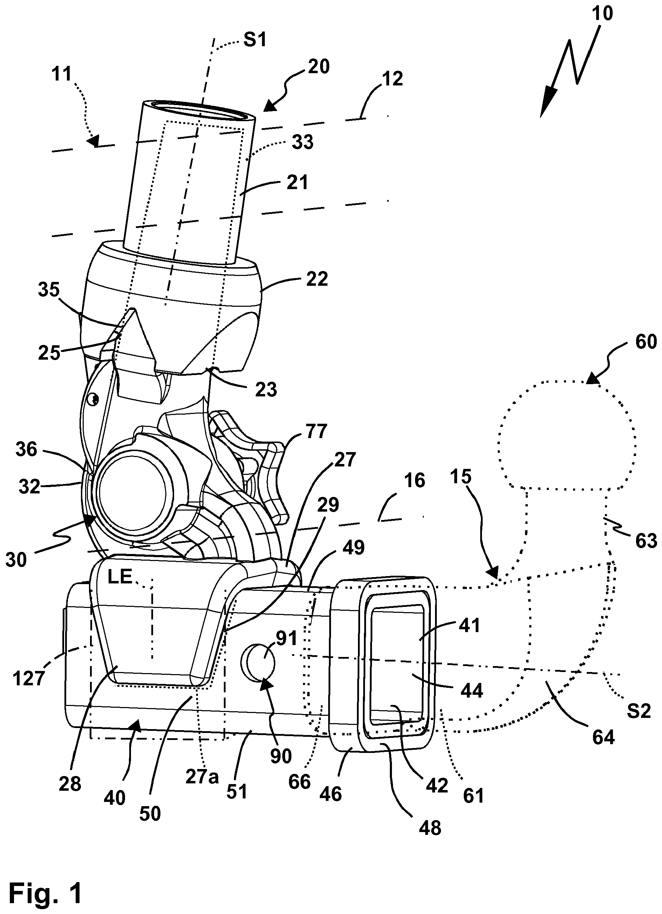

Die Riegelanordnung 90 ist bequem zugänglich, da sie an einem vor den Haltersteckvorsprung 33 vorstehenden Abschnitt der Aufnahmehülse 40 vorgesehen ist. Weiterhin zweckmäßig ist es, dass die Aufnahmehülse 40 in Fahrtrichtung des Kraftfahrzeugs 11 nach hinten vor den Haltersteckvorsprung 33 vorsteht, also beispielsweise wie in Figur 1 dargestellt zweckmäßigerweise vor den Stoßfänger 16 nach hinten vor das Kraftfahrzeug 11 vorsteht.

Die Verriegelungsaufnahmen einer erfindungsgemäßen Anhängekupplung, beispielsweise also die Verriegelungsaufnahmen 91, 92 und/oder eine Steckachse des Riegelelements verlaufen also zweckmäßigerweise quer, insbesondere rechtwinkelig quer, zur Steckachse, entlang derer der Kupplungssteckvorsprung in die Kupplungssteckaufnahme einsteckbar oder aus dieser wieder entnehmbar ist.

Das Riegelelement 93 weist einen Steckabschnitt 94 auf, der durch die Verriegelungsaufnahmen 91, 92 durchgesteckt ist. Das Riegelelement 93 kann bequem am Handhabungsabschnitt 95 ergriffen werden. Der Handhabungsabschnitt 95 und der Steckabschnitt 94 sind zueinander winkelig. An der zu dem Handhabungsabschnitt 95 entgegengesetzten Seite des Steckabschnitts 94 kann beispielsweise ein Sicherungsstift oder -splint oder dergleichen vorgesehen sein, um das Riegelelement 93 optimal gegen ein unerwünschtes Herausziehen zu sichern (in der Zeichnung allerdings nicht dargestellt).

Anstelle des Kupplungsteils 60 kann aber auch ein Kupplungsteil 160 mit seinem Kupplungssteckvorsprung 166 in die Kupplungssteckaufnahme 41 eingesteckt werden. Das Kupplungsteil 160 weist beispielsweise einen Kupplungsträger 163 auf, der einen vorstehenden Abschnitt 162 hat. Der Abschnitt 162 ist beispielsweise plattenförmig. Somit kann ein Bolzenkörper 167, an dessen freiem Endbereich ein Kuppelelement 165 angeordnet ist, durch eine Durchstecköffnung des Abschnitts 162 durchgesteckt werden. Der vor den Abschnitt 162 vorstehende Bereich des Bolzenkörpers 167 kann anhand einer Mutter 164 gesichert sein.

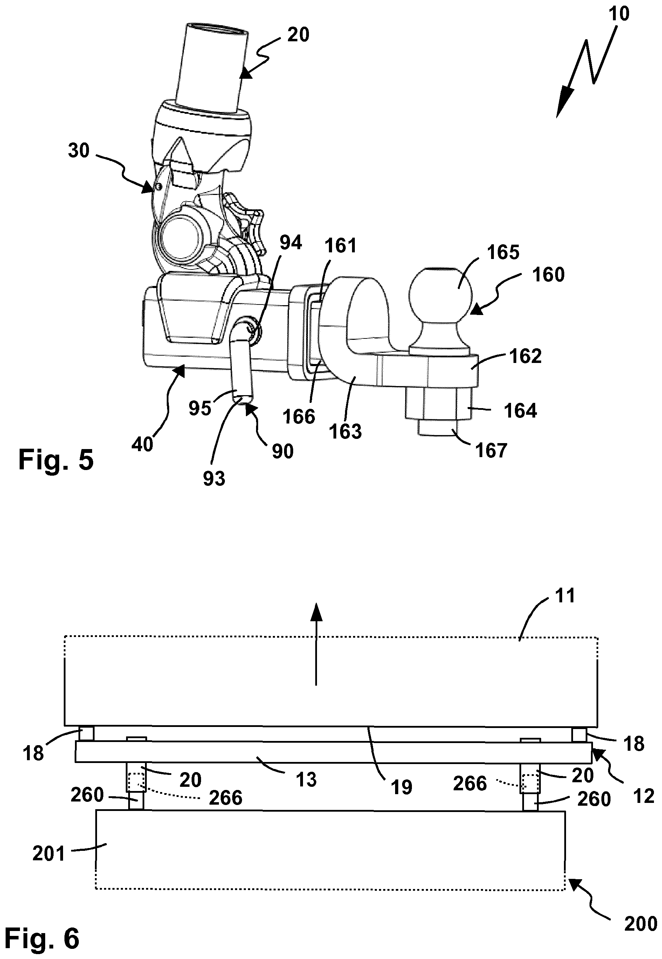

In Figur 6 ist das erfindungsgemäße Konzept anhand eines Lastenträgers 200 dargestellt. Der Lastenträger 200 weist beispielsweise Kupplungssteckvorsprünge 266 auf, die an seinen Kupplungsteilen 260 angeordnet sind.

An einem Querträger 13, der sich hinten am Heck 19 des Kraftfahrzeugs 11 quer erstreckt und beispielsweise mit Seitenträgern 18 am Kraftfahrzeug 11 befestigt ist, sind beispielsweise zwei Halter 20 angeordnet. Die Halter 20 sind beispielsweise in einem Querabstand am Heck 19 des Kraftfahrzeugs 11 angeordnet. In die Halter 20 sind beispielsweise jeweils Halterteile 30 eingesteckt. Die Halterteile 30 weisen Kupplungssteckaufnahmen 41 auf, in die der Lastenträger 200 mit seinen Kupplungssteckvorsprüngen 266 einsteckbar ist.

Die Steckachse S2, entlang derer die Kupplungsvorsprünge 66, 166, 266 in die Kupplungssteckaufnahme(en) 41 einsteckbar sind, verläuft vorzugsweise im Wesentlichen horizontal (in der Gebrauchslage des Kraftfahrzeugs 11). Eine Steckachse S1, entlang derer der Haltersteckvorsprung 33 in die Haltersteckaufnahme 24 einzustecken ist, verläuft hingegen vorzugsweise winkelig zu der Steckachse S2, vorzugsweise beispielsweise im Wesentlichen vertikal.

Ein erfindungsgemäßes Halterteil kann auch mehrteilig sein, wie zum Beispiel in Figur 7 dargestellt.

Ein Halterteil 130 einer Anhängekupplung 110 entspricht im Wesentlichen dem Halterteil 30, hat jedoch keine fest montierte Aufnahmehülse, sondern ein Basisteil 159 und ein eine Aufnahmehülse 140 tragendes und an dem Basisteil 159 lösbar montierbares Aufnahmeteil. Zur lösbaren Befestigung ist eine Anordnung von Flanschplatten 150 mit einem an einem Armabschnitt 131 des Halterteils 130 angeordneten Flanschteil 151 vorgesehen, das an seiner Frontseite eine Stützfläche bereitstellt, an der eine Stützfläche eines Flanschteils 152 abgestützt ist. An einer von dem Flanschteil 151 abgewandten Frontseite des Flanschteils 152 ist eine Aufnahmehülse 140 angeordnet, die geometrisch und funktional der Aufnahmehülse 40 entspricht, also beispielsweise eine Kupplungssteckaufnahme 41 für das Kupplungsteil 60 oder 160 oder auch den Kupplungssteckvorsprung 266 hat.

Die Aufnahmehülse 140 ist rückseitig, d.h. an ihrer von der Einstecköffnung 44 abgewandten Rückseite 142, an dem Flanschteil 152 abgestützt.

Die Flanschteile 150, 152 sind anhand einer Schraubenanordnung 157 miteinander verschraubt. Die Schraubenanordnung 157 umfasst beispielsweise Schrauben 156, die wahlweise in Schraubaufnahmen 154 oder Schraubaufnahmen 155 am Flanschteil 151 einschraubbar sind. Somit kann das Flanschteil 152 in mindestens zwei voneinander verschiedenen Montagelängspositionen M1 und M2 montiert werden, sodass die Aufnahmehülse 40 und somit auch die Kupplungssteckaufnahme 41 dieselben unterschiedlichen Abstände zu einer Fahrbahnoberfläche O haben. Eine Längserstreckung LX des Flanschteils 151 und/oder 152 ist ausreichend groß, dass sich die Stützflächen 171, 172 der Flanschteile 151, 152 in beiden Montagelängspositionen M1 und M2 flächig und in ausreichender Ausdehnung aneinander abstützen können.

Es versteht sich, dass diese Konstruktion sich auch optimal dazu eignet, beispielsweise den Lastenträger 200 in unterschiedlichen Höhenpositionen bezüglich der Fahrbahnoberfläche O zu befestigen. Somit könnte beispielsweise das Halterteil 130 anstelle des Halterteils 30 bei der Anordnung gemäß Figur 6 verwendet werden, sodass der Lastenträger 200 in unterschiedlichen Abständen zur Fahrbahnoberfläche O am Kraftfahrzeug 11 montierbar ist.

## Patentansprüche

1. Anhängekupplung für ein Kraftfahrzeug (11), insbesondere einen Personenkraftwagen, mit einem an dem Kraftfahrzeug (11) angeordneten oder befestigbaren Halter (20) und einen an dem Halter (20) lösbar befestigbaren Halterteil (30), das einen Haltersteckvorsprung (33) zum Einstecken in eine Haltersteckaufnahme (24) des Halters (20) aufweist, wobei das Halterteil (30) eine integrierte Verriegelungseinrichtung (70) mit mindestens einem Verriegelungskörper (71) und einen in dem Halterteil (30) zur Betätigung des mindestens einen Verriegelungskörpers (71) in eine Verriegelungsstellung (R) beweglich gelagerten Betätigungskörper (73) aufweist, wobei der mindestens eine Verriegelungskörper (71) in der Verriegelungsstellung (R) in eine Verriegelungsaufnahme (72) am Halter (20) formschlüssig eingreift und in einer Lösestellung (L) aus der Verriegelungsaufnahme (72) herausbewegt ist, sodass der Haltersteckvorsprung (33) des Halterteils (30) in der Haltersteckaufnahme (24) des Halters (20) in der Verriegelungsstellung (R) des mindestens einen Verriegelungskörpers (71) formschlüssig verriegelt ist und in der Lösestellung (L) aus der Haltersteckaufnahme (24) des Halters (20) entfernbar ist, wobei das Halterteil (30) zur Bildung eines Kupplungsarms (15), der ein Kupplungsteil (60) mit einem Kuppelelement (65), insbesondere einer Kupplungskugel, zum Ankuppeln eines Lastenträgers (200) oder eines Anhängers aufweist, oder zum direkten Ankoppeln eines Lastenträgers (200) vorgesehen ist, wobei das Halterteil (30) eine Aufnahmehülse (40) mit einer rohrförmigen Kupplungssteckaufnahme (41) zum Einstecken eines Kupplungssteckvorsprungs (66; 266) des Kupplungsteils (60) oder des Lastenträgers (200) aufweist, **dadurch gekennzeichnet, dass** die Kupplungssteckaufnahme (41) einen in ihren Innenquerschnitt (44) vorstehenden Endanschlag (43) in Gestalt eines Bodens für eine freie Stirnseite des Kupplungssteckvorsprungs (66; 266) aufweist.

2. Anhängekupplung nach Anspruch 1, **dadurch gekennzeichnet, dass** das Halterteil (30) eine gabelförmige oder ringförmige Halterung (27, 127) aufweist, in welcher die Aufnahmehülse (40) gehalten ist.

3. Anhängekupplung nach Anspruch 2, **dadurch gekennzeichnet, dass** die Halterung (27, 127) seitliche Arme (28) aufweist, an denen Wände (50) der Aufnahmehülse (40) anliegen und/oder
dass die Aufnahmehülse (40) an einem Boden der Halterung (27, 127) anliegt, von der Arme (28) abstehen und/oder
dass die Aufnahmehülse (40) an mindestens drei zueinander winkeligen Seiten an der Halterung (27, 127) abgestützt ist und/oder
dass sich Arme (28) der Halterung (27) zu ihren freien Endbereichen hin verjüngen und/oder
dass mit Bezug auf eine Längserstreckung (LE) der Arme (28) der Halterung (27) ein vor die Arme (28) vorstehender Abschnitt der Aufnahmehülse (40) kürzer als ein zwischen den Armen (28) aufgenommener Abschnitt der Aufnahmehülse (40) ist und/oder
dass ein größerer Querschnitt der Aufnahmehülse (40) in einem von der Halterung (27) begrenzten Aufnahmeraum (29) aufgenommen ist als vor den Aufnahmeraum (29) vorsteht und/oder dass der Haltersteckvorsprung (33) und die Halterung (27, 127) des Halterteils (30) von einem einstückigen Körper (36), insbesondere ein Gussteil oder Schmiedeteil, gebildet sind oder einstückig an einem Körper (36) angeordnet sind.

4. Anhängekupplung nach einem der vorhergehenden Ansprüche, **dadurch gekennzeichnet, dass** die Aufnahmehülse (40) mit einer die Aufnahmehülse (40) insbesondere ringförmig oder gabelförmig aufnehmenden Halterung (27, 127) des Halterteils (30) verschweißt und/oder verklebt und/oder verschraubt ist und/oder dass die Aufnahmehülse (40) so an dem Haltersteckvorsprung (33) oder dem Halterteil (30) angeordnet ist, dass die Aufnahmehülse (40) im am Kraftfahrzeug (11) montierten Zustand zu einem Stoßfänger (16) des Kraftfahrzeugs (11) hin vor den Haltersteckvorsprung (33) vorsteht und/oder dass die Aufnahmehülse (40) so an dem Haltersteckvorsprung (33) oder dem Halterteil (30) angeordnet ist, dass sie entgegen einer Vorwärts-Fahrtrichtung des Kraftfahrzeugs (11) nach hinten vor den Haltersteckvorsprung (33) vorsteht, und/oder dass die Aufnahmehülse (40) so an dem Haltersteckvorsprung (33) oder dem Halterteil (30) angeordnet ist, dass sie vor den Stoßfänger (16) oder ein Heck (14) des Kraftfahrzeugs (11) vorsteht.

5. Anhängekupplung nach einem der vorhergehenden Ansprüche, **dadurch gekennzeichnet, dass** am Außenumfang des Kupplungssteckvorsprungs (66; 266) ein insbesondere flanschartiger Anschlag zum Anschlagen an einer freien Stirnseite (48) der Aufnahmehülse (40) vorgesehen ist, wobei vorteilhaft vorgesehen ist, dass an einer freien Stirnseite (48) der Aufnahmehülse (40) ein Flanschvorsprung zum Anschlagen des Kupplungssteckvorsprungs (66; 266) angeordnet ist.

6. Anhängekupplung nach einem der vorhergehenden Ansprüche, **dadurch gekennzeichnet, dass** die Aufnahmehülse (40) durch mindestens ein Versteifungselement versteift ist und/oder dass die Aufnahmehülse (40) durch mindestens einen Verstärkungsring (46) verstärkt ist, wobei vorteilhaft vorgesehen ist, dass der mindestens eine Verstärkungsring (46) einen an der freien Stirnseite (48) der Aufnahmehülse (40) angeordneten Verstärkungsring (46) umfasst oder durch diesen gebildet ist.

7. Anhängekupplung nach einem der vorhergehenden Ansprüche, **dadurch gekennzeichnet, dass** der Kupplungssteckvorsprung (66; 266) an der Kupplungssteckaufnahme (41) anhand einer Riegelanordnung (90) verriegelbar ist.

8. Anhängekupplung nach Anspruch 7, **dadurch gekennzeichnet, dass** die Riegelanordnung (90), insbesondere mindestens eine Verriegelungsaufnahme (91) der Aufnahmehülse (40), an einem in Fahrtrichtung des Kraftfahrzeugs (11) nach hinten vor den Haltersteckvorsprung (30) vorstehenden Abschnitt der Aufnahmehülse (90) angeordnet ist und/oder dass die Riegelanordnung (90) ein Riegelelement (93) aufweist, das in eine Verriegelungsaufnahme (91) der Aufnahmehülse (40) einsteckbar oder durch die Verriegelungsaufnahme (91) durchsteckbar ist und/oder dass die Riegelanordnung (90) ein Riegelelement (93) aufweist, das durch Verriegelungsaufnahmen (91, 92) durchsteckbar ist, die an dem Kupplungssteckvorsprung (66; 266) und der Kupplungssteckaufnahme (41) vorgesehen sind und miteinander fluchten, wenn der Kupplungssteckvorsprung (66; 266) in die Kupplungssteckaufnahme (41) eingesteckt ist.

9. Anhängekupplung nach einem der vorhergehenden Ansprüche, **dadurch gekennzeichnet, dass** die Kupplungssteckaufnahme (41) und der Kupplungssteckvorsprung (66; 266) mindestens eine Verdrehsicherungskontur zur verdrehsicheren Aufnahme des Kupplungssteckvorsprungs (66; 266) in der Kupplungssteckaufnahme (41) aufweisen, wobei zweckmäßigerweise vorgesehen ist, dass die Kupplungssteckaufnahme (41) und der Kupplungssteckvorsprung (66; 266) einen polygonalen, insbesondere etwa rechteckigen, Querschnitt aufweisen.

10. Anhängekupplung nach einem der vorhergehenden Ansprüche, **dadurch gekennzeichnet, dass** eine Steckachse der Kupplungssteckaufnahme (41) und eine Steckachse (S1) der Haltersteckaufnahme (24) des Halters (20) winkelig, insbesondere etwa rechtwinkelig, zueinander sind und/oder dass eine Steckachse (S2) der Kupplungssteckaufnahme (41) im Wesentlichen horizontal verläuft und/oder eine Steckachse (S1) der Haltersteckaufnahme (24) im Wesentlichen vertikal verläuft und/oder dass die Aufnahmehülse (40) lösbar mit dem Halterteil (30) verbunden ist, insbesondere mit dem Halterteil (30) verschraubt ist, oder dass die Aufnahmehülse (40) einen integralen Bestandteil des Halterteils (30) bildet

11. Anhängekupplung nach einem der vorhergehenden Ansprüche, **dadurch gekennzeichnet, dass** an dem Halterteil (30) und dem Halter (20) insbesondere keilförmige Formschlusskonturen (35, 25) vorgesehen sind, die in Eingriff sind, wenn der Haltersteckvorsprung (33) in die Haltersteckaufnahme (24) eingreift, wobei vorteilhaft vorgesehen ist, dass der Haltersteckvorsprung (33) vorteilhaft in Einsteckrichtung vor die Formschlusskonturen (35) vorsteht und/oder im wesentlichen kreiszylindrisch ist.

12. Anhängekupplung nach einem der vorhergehenden Ansprüche, **dadurch gekennzeichnet, dass** an dem Halterteil (30) ein Handbetätigungselement (77), insbesondere ein Handrad, zum Verstellen des Betätigungskörpers (73) in Richtung der Lösestellung (L) und/oder der Verriegelungsstellung angeordnet ist und/oder dass der Betätigungskörper (73) und/oder das mindestens eine Verriegelungselement durch eine Federanordnung in Richtung der Verriegelungsstellung (R) belastet ist und/oder dass der Betätigungskörper (73) ein Bolzenelement (74) umfasst oder dadurch gebildet ist und/oder dass der Betätigungskörper (73) in einem Kanal (87) zur Verstellung des mindestens einen Verriegelungskörpers (71) zwischen der Lösestellung (L) und der Verriegelungsstellung (R) längsverschieblich gelagert ist und/oder dass der mindestens eine Verriegelungskörper (71) eine Kugel oder einen Wälzkörper umfasst oder dadurch gebildet ist.

13. Anhängekupplung nach einem der vorhergehenden Ansprüche, **dadurch gekennzeichnet, dass** das Halterteil (30) ein Basisteil (159) und ein die Aufnahmehülse (40) tragendes Aufnahmeteil (158), an denen jeweils ein Flanschteil (151, 152) angeordnet ist, wobei sich die Flanschteile (151, 152) mit Stützflächen (171, 172) aneinander abstützen und anhand einer Schraubanordnung miteinander verschraubbar sind, wobei vorteilhaft vorgesehen ist, dass die Flanschteile (151, 152) in mindestens zwei voneinander verschiedenen Montagelängspositionen (M1, M2) bezüglich einer Längserstreckung (LX) ihrer Stützflächen (171, 172) aneinander lösbar montierbar sind, sodass das die Aufnahmehülse (40) tragende Aufnahmeteil (158) in mindestens zwei voneinander verschiedenen Abständen zu einer Fahrbahnoberfläche (O) an dem Basisteil (159) montierbar ist.

14. Anhängekupplung nach einem der vorhergehenden Ansprüche, **dadurch gekennzeichnet, dass** die Aufnahmehülse (140) an ihrer von einer Einstecköffnung (42) für den Kupplungssteckvorsprung (66) abgewandten Rückseite (142) durch ein an dem Halterteil (30) gehaltenes Flanschteil (152) abgestützt ist.

## Claims

1. Trailer coupling for a motor vehicle (11), in particular a passenger car, comprising a retainer (20) which is arranged on or can be fastened to the motor vehicle (11), and a retainer part (30), which can be detachably fastened to the retainer (20) and which has a retainer insertion projection (33) for inserting into a retainer insertion receptacle (24) of the retainer (20), wherein the retainer part (30) has an integrated locking device (70) having at least one locking body (71) and an actuation body (73), which is supported in the retainer part (30) so as to be movable in order to actuate the at least one locking body (71) into a locking position (R), wherein the at least one locking body (71) interlockingly engages in a locking receptacle (72) on the retainer (20) in the locking position (R) and is moved out of the locking receptacle (72) in a detaching position (L), so that the retainer insertion projection (33) of the retainer part (30) is interlockingly engaged in the retainer projection receptacle (24) of the retainer (20) in the locking position (R) of the at least one locking body (71) and in the release position (L) can be removed from the retainer insertion receptacle (24) of the retainer (20), wherein the retainer part (30) is provided for forming a coupling arm (15), which has a coupling part (60) having a coupling element (65), in particular a coupling ball, for coupling a load carrier (200) or a trailer, or for directly coupling a load carrier (200), wherein the retainer part (30) has a receiving sleeve (40) with a tubular coupling insertion receptacle (41) for inserting a coupling insertion projection (66;266) of the coupling part (60) or of the load carrier (200), **characterised in that** the coupling insertion receptacle (41) has an end stop (43) projecting into its inner cross-section (44) in the form of a base for a free end face of the coupling insertion projection (66;266).

2. Trailer coupling according to claim 1, **characterised in that** the retainer part (30) has a bifurcate or ring-shaped attachment (27, 127) which holds the receiving sleeve (40).

3. Trailer coupling according to claim 2, **characterised in that** the attachment (27, 127) has arms (28) on the side against which walls of the receiving sleeve (40) rests, and/or
**in that** the receiving sleeve (40) rests on a base of the attachment (27, 127) from which the arms (28) protrude, and/or
**in that** the receiving sleeve (40) is supported on at least three sides of the attachment (27, 127) angled relative to each other, and/or
**in that** arms (28) of the attachment (27) taper towards the free ends thereof, and/or
**in that** in relation to a longitudinal extension (LE) of the arms (28) of the attachment (27) a section of the receiving sleeve (40) protruding from the arms (28) is shorter than a section of the receiving sleeve (40) accommodated between the arms (28), and/or
**in that** a larger cross section of the receiving sleeve (40) is accommodated in a receiving space (29) defined by the attachment (27) than protrudes from the receiving space (29), and/or **in that** the retainer insertion projection (33) and the attachment (27, 127) of the retainer part (30) are formed by an integral body (36), in particular a cast part or forged part, or are arranged on a body (36) as a single piece.

4. Trailer coupling according to any one of the preceding claims, **characterised in that** the receiving sleeve (40) is welded and/or glued and/or screwed to an in particular bifurcate or ring-shaped attachment (27, 127) of the retainer part (30) accommodating the receiving sleeve (40), and/or **in that** the receiving sleeve (40) is arranged on the retainer insertion projection (33) or the retainer part (30) such that in the state of being assembled on the motor vehicle (11) the receiving sleeve (40) protrudes from the retainer insertion projection (33) towards a bumper (16) of the motor vehicle (11), and/or **in that** the receiving sleeve (40) is arranged on the retainer insertion projection (33) or the retainer part (30) such that it protrudes backwards from the retainer insertion projection (33) counter to a forward direction of travel of the motor vehicle (11), and/or **in that** the receiving sleeve (40) is arranged on the retainer insertion projection (33) or the retainer part (30) such that it protrudes from the bumper (16) or a rear end (14) of the motor vehicle (11).

5. Trailer coupling according to any one of the preceding claims, **characterised in that** an in particular flange-type stop is provided on the outer circumference of the coupling insertion projection (66; 266) for striking a free front side (48) of the receiving sleeve (40), wherein it is advantageously provided that a flange projection for striking the coupling insertion projection (66;266) is arranged on a free front side (48) of the receiving sleeve (40).

6. Trailer coupling according to any one of the preceding claims, **characterised in that** the receiving sleeve (40) is reinforced by at least one reinforcing element and/or that the receiving sleeve (40) is reinforced by at least one reinforcing ring (46), wherein it is advantageously provided that the at least one reinforcing ring (46) comprises a reinforcing ring (46) arranged on the free front side (48) of the receiving sleeve (40) or is formed by the latter.

7. Trailer coupling according to any one of the preceding claims, **characterised in that** the coupling insertion projection (66; 266) can be locked to the coupling insertion receptacle (41) by means of a locking arrangement (90).

8. Trailer coupling according to claim 7, **characterised in that** the locking arrangement (90), in particular at least one locking receptacle (91) of the receiving sleeve (40), is arranged on a section of the receiving sleeve (90) protruding backwards from the retainer insertion projection (30) in the direction of travel of the motor vehicle (11), and/or **in that** the locking arrangement (90) has a locking element (93), which can be inserted into a locking receptacle (91) of the receiving sleeve (40) or can be pushed through the locking receptacle (91), and/or in that the locking arrangement (90) has a locking element (93), which can be pushed through locking receptacles (91, 92), which are provided on the coupling insertion projection (66; 266) and the coupling insertion receptacle (41) and are flush with each other when the coupling insertion projection (66; 266) is inserted into the coupling insertion receptacle (41).

9. Trailer coupling according to any one of the preceding claims, **characterised in that** the coupling insertion receptacle (41) and the coupling insertion projection (66; 26) have at least one anti-rotation contour to receive the coupling insertion projection (66; 266) in the coupling insertion receptacle (41) in rotationally-locked manner, wherein provision is advantageously made that the coupling insertion receptacle (41) and the coupling insertion projection (66; 266) have a polygonal, in particular approximately rectangular, cross section.

10. Trailer coupling according to any one of the preceding claims, **characterised in that** an axis of insertion of the coupling insertion receptacle (41) and an axis of insertion (S1) of the retainer insertion receptacle (24) of the retainer (20) are angled relative to each other, in particular at right angles to each other, and/or **in that** an axis of insertion (S2) of the coupling insertion receptacle (41) runs substantially horizontal and/or an axis of insertion (S1) of the retainer insertion receptacle (24) runs substantially vertical, and/or **in that** the receiving sleeve (40) is detachably fastened to the retainer part (30), in particular is screwed to the retainer part (30), or that the receiving sleeve (40) forms an integral element of the retainer part (30).

11. Trailer coupling according to any one of the preceding claims, **characterised in that** in particular wedge-shaped positive locking contours are provided on the retainer part (30) and the retainer (20), which engage when the retainer insertion projection (33) engages with the retainer insertion receptacle (24), wherein it is advantageously provided that the retainer insertion projection (33) protrudes advantageously from the positive locking contours (35) in the direction of insertion and/or is substantially cylindrical.

12. Trailer coupling according to any one of the preceding claims, **characterised in that** a manual actuation element (77), in particular a hand wheel, is arranged on the retainer part (30) for moving the actuation body (73) towards the release position (L) and/or the locking position, and/or **in that** the actuation body (73) and/or the at least one locking element is loaded by a spring arrangement in the direction of the locking position (R), and/or **in that** the actuation body (73) comprises a bolt element (74) or is formed thereby, and/or **in that** the actuation body (73) is fitted in a channel (87) so as to be displaceable lengthways in order to move the at least one locking body (71) between the release position (L) and the locking position (R), and/or **in that** the at least one locking body (71) comprises a ball or a rolling element or is formed thereby.

13. Trailer coupling according to any one of the preceding claims, **characterised in that** the retainer part (30) has a base part (159) and a receptacle part (158) supporting the receiving sleeve (40), on which a flange part (151, 152) is arranged, wherein the flange parts (151, 152) support each other with supporting surfaces (171, 171) and can be screwed together by means of a screw assembly, wherein it is advantageously provided that the flange parts (151, 152) can be detachably fitted in at least two different longitudinal fitting positions (M1, M2) relative to a longitudinal extension (LX) of the supporting surfaces (171, 172) thereof so that the receiving part (158) supporting the receiving sleeve (158) can be fitted on the base part (159) at at least two different distances from a road surface (O).

14. Trailer coupling according to any one of the preceding claims, **characterised in that** the receiving sleeve (140) is supported on the rear side (142) thereof facing away from an insertion opening (42) for the coupling insertion projection (66) by a flange part (152) attached to the retainer part (30).

## Revendications

1. Attelage de remorque pour un véhicule à moteur (11), en particulier une voiture de tourisme, avec un système de maintien (20) disposé ou pouvant être fixé sur le véhicule à moteur (11) et une partie de système de maintien (30) pouvant être fixée de manière amovible sur le système de maintien (20), qui présente une partie faisant saillie d'enfichage de système de maintien (33) destinée à être emboîtée dans un logement d'enfichage de système de maintien (24) du système de maintien (20), dans lequel la partie de système de maintien (30) présente un dispositif de verrouillage (70) intégré avec au moins un corps de verrouillage (71) et un corps d'actionnement (73) monté de manière mobile dans la partie de système de maintien (30) pour actionner l'au moins un corps de verrouillage (71) dans une position de verrouillage (R), dans lequel l'au moins un corps de verrouillage (71) vient en prise par complémentarité de forme avec un logement de verrouillage (72) sur le système de maintien (20) dans la position de verrouillage (R) et est déplacé hors du logement de verrouillage (72) dans une position de desserrage (L) si bien que la partie faisant saillie d'enfichage de système de maintien (33) de la partie de système de maintien (30) est verrouillée par complémentarité de forme dans le logement d'enfichage de système de maintien (24) du système de maintien (20) dans la position de verrouillage (R) de l'au moins un corps de verrouillage (71) et peut être retirée hors du logement d'enfichage de système de maintien (24) du système de maintien (20) dans la position de desserrage (L), dans lequel la partie de système de maintien (30) est prévue pour former un bras d'attelage (15), qui présente une partie d'attelage (60) avec un élément d'attelage (65), en particulier une boule d'attelage, pour atteler un support de charges (200) ou une remorque, ou pour accoupler directement un support de charges (200), dans lequel la partie de système de maintien (30) présente un manchon de logement (40) avec un logement d'enfichage d'attelage (41) tubulaire pour enficher une partie faisant saillie d'enfichage d'attelage (66 ; 266) de la partie d'attelage (60) ou du support de charges (200), **caractérisé en ce que** le logement d'enfichage d'attelage (41) présente une butée de fin de course (43) faisant saillie dans sa section transversale intérieure (44) sous la forme d'un fond pour un côté frontal libre de la partie faisant saillie d'enfichage d'attelage (66 ; 266).

2. Attelage de remorque selon la revendication 1, **caractérisé en ce que** la partie de système de maintien (30) présente une fixation (27, 127) en forme de fourche ou d'anneau, dans laquelle est maintenu le manchon de logement (40).

3. Attelage de remorque selon la revendication 2, **caractérisé en ce que** la fixation (27, 127) présente des bras latéraux (28), sur lesquels reposent des parois (50) du manchon de logement (40), et/ou
que le manchon de logement (40) repose sur un fond de la fixation (27, 127), de laquelle dépassent des bras (28), et/ou
que le manchon de logement (40) est soutenu sur au moins trois côtés formant un angle les uns par rapport aux autres sur la fixation (27, 127), et/ou
que des bras (28) de la fixation (27) se rétrécissent en direction de leurs zones d'extrémité libres, et/ou
qu'une section, faisant saillie devant les bras (28), du manchon de logement (40) est plus courte qu'une section, logée entre les bras (28), du manchon de logement (40) par rapport à une extension longitudinale (LE) des bras (28) de la fixation (27), et/ou
qu'est logée dans un espace de logement (29) délimité par la fixation (27) une section transversale plus grande du manchon de logement (40) que celle qui fait saillie devant l'espace de logement (29), et/ou que la partie faisant saillie d'enfichage de système de maintien (33) et la fixation (27, 127) de la partie de système de maintien (30) sont formées par un corps (36) d'un seul tenant, en particulier une partie moulée ou une partie forgée ou sont disposées d'un seul tenant sur un corps (36).

4. Attelage de remorque selon l'une quelconque des revendications précédentes, **caractérisé en ce que** le manchon de logement (40) est soudé et/ou collé et/ou vissé à une fixation (27, 127), logeant en particulier en forme d'anneau ou en forme de fourche le manchon de logement (40), de la partie de système de maintien (30), et/ou que le manchon de logement (40) est disposé de telle sorte sur la partie faisant saillie d'enfichage de système de maintien (33) ou sur la partie de système de maintien (30) que le manchon de logement (40) fait saillie devant la partie faisant saillie d'enfichage de système de maintien (33) en direction d'un pare-chocs (16) du véhicule à moteur (11) dans l'état monté sur le véhicule à moteur (11), et/ou que le manchon de logement (40) est disposé de telle sorte sur la partie faisant saillie d'enfichage de système de maintien (33) ou sur la partie de système de maintien (30) qu'il fait saillie devant la partie faisant saillie d'enfichage de système de maintien (33) vers l'arrière à l'opposé d'un sens de la marche avant du véhicule à moteur (11), et/ou que le manchon de logement (40) est disposé de telle sorte sur la partie faisant saillie d'enfichage de système de maintien (33) ou sur la partie de système de maintien (30) qu'elle fait saillie devant le pare-chocs (16) ou un hayon (14) du véhicule à moteur (11).

5. Attelage de remorque selon l'une quelconque des revendications précédentes, **caractérisé en ce qu'**une butée en particulier de type flasque destinée à venir buter sur un côté frontal (48) libre du manchon de logement (40) est prévue sur la périphérie extérieure de la partie faisant saillie d'enfichage d'attelage (66 ; 266), dans lequel il est prévu de manière avantageuse qu'une partie faisant saillie de flasque destinée à la butée de la partie faisant saillie d'enfichage d'attelage (66 ; 266) est disposée sur un côté frontal (48) libre du manchon de logement (40).

6. Attelage de remorque selon l'une quelconque des revendications précédentes, **caractérisé en ce que** le manchon de logement (40) est rigidifié par au moins un élément de rigidification, et/ou que le manchon de logement (40) est renforcé par au moins un anneau de renforcement (46), dans lequel il est prévu de manière avantageuse que l'au moins un anneau de renforcement (46) comprend un anneau de renforcement (46) disposé sur le côté frontal (48) libre du manchon de logement (40) ou en est formé.

7. Attelage de remorque selon l'une quelconque des revendications précédentes, **caractérisé en ce que** la partie faisant saillie d'enfichage d'attelage (66 ; 266) peut être verrouillée à l'aide d'un ensemble formant verrou (90) sur le logement d'enfichage d'attelage (41).

8. Attelage de remorque selon la revendication 7, **caractérisé en ce que** l'ensemble formant verrou (90), en particulier au moins un logement de verrouillage (91), du manchon de logement (40), est disposé sur une section du manchon de logement (90) faisant saillie devant la partie faisant saillie d'enfichage de système de maintien (30) vers l'arrière dans le sens de la marche du véhicule à moteur (11), et/ou que l'ensemble formant verrou (90) présente un élément formant verrou (93) qui peut être emboîté dans un logement de verrouillage (91) du manchon de logement (40) ou peut être enfiché à travers le logement de verrouillage (91) de part en part, et/ou que l'ensemble formant verrou (90) présente un élément formant verrou (93) qui peut être enfiché à travers des logements de verrouillage (91, 92) de part en part, qui sont prévus sur la partie faisant saillie d'enfichage d'attelage (66 ; 266) et sur le logement d'enfichage d'attelage (41) et sont alignés les uns avec les autres lorsque la partie faisant saillie d'enfichage d'attelage (66 ; 266) est emboîtée dans le logement d'enfichage d'attelage (41).

9. Attelage de remorque selon l'une quelconque des revendications précédentes, **caractérisé en ce que** le logement d'enfichage d'attelage (41) et la partie faisant saillie d'enfichage d'attelage (66 ; 266) présentent au moins un contour de blocage anti-rotation pour loger tout en bloquant toute rotation la partie faisant saillie d'enfichage d'attelage (66 ; 266) dans le logement d'enfichage d'attelage (41), dans lequel il est prévu de manière opportune que le logement d'enfichage d'attelage (41) et la partie faisant saillie d'enfichage d'attelage (66 ; 266) présentent une section transversale polygonale, en particulier à peu près rectangulaire.

10. Attelage de remorque selon l'une quelconque des revendications précédentes, **caractérisé en ce qu'**un axe d'enfichage du logement d'enfichage d'attelage (41) et un axe d'enfichage (S1) du logement d'enfichage de système de maintien (24) du système de maintien (20) forment l'un par rapport à l'autre un angle, en particulier à peu près un angle droit, et/ou qu'un axe d'enfichage (S2) du logement d'enfichage d'attelage (41) s'étend de manière sensiblement horizontale et/ou un axe d'enfichage (S1) du logement d'enfichage de système de maintien (24) s'étend de manière sensiblement verticale, et/ou que le manchon de logement (40) est relié de manière amovible à la partie de système de maintien (30), en particulier est vissé à la partie de système de maintien (30), ou que le manchon de logement (40) forme une composante intégrale de la partie de système de maintien (30).

11. Attelage de remorque selon l'une quelconque des revendications précédentes, **caractérisé en ce que** sont prévus sur la partie de système de maintien (30) et le système de maintien (20), des contours à complémentarité de forme (35, 25) en particulier coniques, qui sont en prise lorsque la partie faisant saillie d'enfichage de système de maintien (33) vient en prise avec le logement d'enfichage de système de maintien (24), dans lequel il est prévu de manière avantageuse que la partie faisant saillie d'enfichage de système de maintien (33) fait saillie de manière avantageuse devant les contours à complémentarité de forme (35) dans le sens d'emboîtement et/ou est sensiblement cylindrique circulaire.

12. Attelage de remorque selon l'une quelconque des revendications précédentes, **caractérisé en ce qu'**un élément d'actionnement manuel (77), en particulier une molette, pour ajuster le corps d'actionnement (73) en direction de la position de desserrage (L) et/ou de la position de verrouillage est disposé sur la partie de système de maintien (30), et/ou que le corps d'actionnement (73) et/ou l'au moins un élément de verrouillage sont contraints par un ensemble formant ressort en direction de la position de verrouillage (R), et/ou que le corps d'actionnement (73) comprend un élément formant boulon (74) ou en est formé, et/ou que le corps d'actionnement (73) est monté de manière à pouvoir coulisser longitudinalement dans un canal (87) pour ajuster l'au moins un corps de verrouillage (71) entre la position de desserrage (L) et la position de verrouillage (R), et/ou que l'au moins un corps de verrouillage (71) comprend une boule ou un corps de roulement ou en est formé.

13. Attelage de remorque selon l'une quelconque des revendications précédentes, **caractérisé en ce que** la partie de système de maintien (30) présente une partie de base (159) et une partie de logement (158) supportant le manchon de logement (40), sur lesquelles est disposée respectivement une partie de flasque (151, 152), dans lequel les parties de flasque (151, 152) sont soutenues l'une sur l'autre par des surfaces d'appui (171, 172) et peuvent être vissées l'une à l'autre à l'aide d'un ensemble de vissage, dans lequel il est prévu de manière avantageuse que les parties de flasque (151, 152) peuvent être montées de manière amovible l'une sur l'autre dans au moins deux positions longitudinales de montage (M1, M2) différentes l'une de l'autre par rapport à une extension longitudinale (LX) de leurs surfaces d'appui (171, 172) si bien que la partie de logement (158) supportant le manchon de logement (40) peut être montée sur la partie de base (159) à au moins deux distances différentes l'une de l'autre par rapport à une surface de chaussée (O).

14. Attelage de remorque selon l'une quelconque des revendications précédentes, **caractérisé en ce que** le manchon de logement (140) est soutenu, sur son côté arrière (142) opposé à une ouverture d'emboîtement (42) pour la partie faisant saillie d'enfichage d'attelage (66), par une partie de flasque (152) maintenue sur la partie de système de maintien (30).
